# EUROPÄISCHE PATENTSCHRIFT

(11) **EP 1 198 704 B1**
(45) Veröffentlichungstag und Bekanntmachung des Hinweises auf die Patenterteilung: **07.06.2006**
(21) Anmeldenummer: 01915396.4
(22) Anmeldetag: 21.03.2001
(51) Int. Cl.: G01N 21/90

(54) **VERFAHREN UND VORRICHTUNG ZUM INSPIZIEREN TRANSPARENTER BEHÄLTER**
METHOD AND DEVICE FOR INSPECTING TRANSPARENT CONTAINERS
PROCEDE ET DISPOSITIF D'INSPECTION DE RECEPTACLES TRANSPARENTS

(30) Priorität: 31.05.2000 DE 10027226
(43) Veröffentlichungstag der Anmeldung: 24.04.2002
(73) Patentinhaber: KRONES AG, 93068 Neutraubling (DE)
(72) Erfinder: WERZINGER, Lothar, 93059 Regensburg (DE); PIANA, Stefan, 93096 Köfering (DE)
(86) Internationale Anmeldenummer: PCT/EP2001/003237
(87) Internationale Veröffentlichungsnummer: WO 2001/092860

(56) Entgegenhaltungen:
- DE-A- 19 904 732
- FR-A- 2 726 651
- FR-A- 2 742 865

## Beschreibung

Die Erfindung betrifft ein Verfahren gemäß dem Oberbegriff des Patentanspruchs 1 und eine Vorrichtung gemäß dem Oberbegriff des Patentanspruchs 4.

Bei der Inspektion transparenter Behälter, insbesondere Getränkeflaschen, werden in der Regel zwei Kamerasysteme und gegebenenfalls mindestens zwei Beleuchtungssysteme eingesetzt, um die Behälterwandauswertung (Seitenwandkontrolle) und die Behälterkonturauswertung durchzuführen, weil zur Konturauswertung eine andere Beleuchtung erforderlich ist als zur Wandauswertung. Durch die beiden Kamerasysteme verteuert sich die Inspektionsvorrichtung. Außerdem ist der Wartungsaufwand hoch (DE 19 904 732 A).

In DE 19 904 732 A wird vorgeschlagen, für die zwei Aufnahmen eine einzige CCD-Kamera zu verwenden, für die Wandaufnahme des Behälters maximale Beleuchtungsintensität einzusetzen, und für die Konturaufnahme desselben Behälters die Beleuchtungsintensität zu reduzieren und die Helligkeitszonen zu Verändern.

Der Erfindung liegt die Aufgabe zugrunde, ein Verfahren der eingangs genannten Art sowie eine zum Durchführen des Verfahrens geeignete Vorrichtung anzugeben, mit denen mit einer einzigen CCD-Kamera eine zuverlässige Wandauswertung und Konturauswertung auf andere Weise möglich sind.

Die gestellte Aufgabe wird verfahrensgemäß mit dem Merkmal des Anspruchs 1 und vorrichtungsgemäß mit den Merkmal des Anspruchs 4 gelöst.

Durch Ändern der Belichtungsempfindlichkeit der einzigen CCD-Kamera lassen sich mit dieser sowohl die optimal belichtete Wandaufnahme als auch die optimal belichtete Konturaufnahme herstellen. Die Belichtungsempfindlichkeit als variabler Verfahrensparameter trägt genau dort den für die Qualität der beiden Aufnahmen entscheidenden Voraussetzungen Rechnung, wo die Aufnahmen letztendlich entstehen, nämlich in der CCD-Kamera. Auf diese Weise werden optimal belichtete Kontur- und Wandaufnahmen gebildet, aus denen eine hohe Auswertezuverlässigkeit resultiert. Es liegt auf der Hand, dass der inspizierte Behälter bei der Inspektion ggf. gedreht werden kann, um mit mehreren ersten und zweiten Aufnahmen eine umfänglich vollständige Abbildung der Behälterwand bzw. des Behälterkonturverlaufs zu erhalten. Ein Behälter kann aber auch mit nur einer einzigen ersten und zweiten Aufnahme vollumfänglich abgebildet werden, wenn optische Vorrichtungen wie Spiegelanordnungen oder dgl. verwendet werden, die bei nur einer Kameraaufnahme gleichzeitig mehrere umfänglich versetzt aufgenommene Behälterabbildungen erzeugen. Geeignete Spiegelanordnungen sind beispielsweise aus WO95/04267 bekannt.

Die Vorrichtung kommt mit einer einzigen CCD-Kamera aus, deren Belichtungsempfindlichkeit jeweils so verändert wird, dass die Wandaufnahme und die Konturaufnahme optimal belichtet werden. Es lassen sich auch kleinste Schäden oder Verunreinigungen der Wand oder Abweichungen an der Kontur mit minimalem apparativem Aufwand feststellen. Ferner ist die Vorrichtung wartungsfreundlich, weil wenige wartungsbedürftige Komponenten vorhanden sind.

Verfahrenstechnisch einfach werden die jeweils ersten und zweiten Aufnahmen bei gleicher Beleuchtungsstärke gebildet. Die Beleuchtung kann bevorzugt durch Blitzen erfolgen, z.B. mit einem LED-Leuchtschirm. Eine aufwändig steuerbare Beleuchtungseinrichtung mit unterschiedlich einstellbaren Helligkeitszonen ist nicht erforderlich.

Die zeitversetzt erfolgenden Aufnahmen eines Behälters werden gespeichert, wobei die Auswertung (Kontur, Wand) danach zeitlich parallel oder nacheinander durchführbar ist.

Vorrichtungsgemäß wird eine Steuereinrichtung benutzt, die die Belichtungsempfindlichkeit der CCD-Kamera durch Verändern der Belichtungszeit optimiert bzw. alternierend ändert. Dies kann anhand mehrerer Triggerpositionen über einen elektronischen Steuerkreis vorgenommen werden.

Zweckmäßigerweise ist die Beleuchtungsquelle wenigstens ein LED-Leuchtfeld, das bevorzugt in Einzelblitzen aktivierbar ist. Auf diese Weise lassen sich die Aufnahmen mit großer Schärfe und gleichförmiger Belichtung erzeugen.

Die Beleuchtungsquelle und die CCD-Kamera können an sich gegenüberliegenden Seiten (Durchlichtkontrolle) des Förderwegs der Behälter angeordnet sein oder auf der gleichen Seite (Auflichtkontrolle).

Anhand der Zeichnung wird eine Ausführungsform des Erfindungsgegenstandes erläutert. Es zeigen:
- Fig. 1: schematisch einen Querschnitt durch eine Vorrichtung zum Inspizieren transparenter Behälter,
- Fig. 2: eine schematische Draufsicht zu Fig. 1,
- Fig. 3: in schematischer Form eine Behälterwandaufnahme, und
- Fig. 4: in schematischer Form eine Behälterkonturaufnahme.

In einer Vorrichtung V zum Inspizieren transparenter Behälter B, beispielsweise Getränkeflaschen aus Glas oder Kunststoff (PET), wird jeder Behälter B aus einer Reihe fortlaufend geförderter Behälter bezüglich der Qualität seiner Behälterwand W und auch seiner Behälterkontur P im Durchlauf inspiziert. Behälter mit Verunreinigungen und/oder Schäden und/oder unzulässigen Konturabweichungen sollen erkannt und nachfolgend ausgesondert werden. Jeder Behälter B wird auf einer Fördervorrichtung F durch einen Inspektionsbereich transportiert. Die Fördervorrichtung F weist beispielsweise zwei Förderbänder 1, 2 auf, die gleichsinnig mit unterschiedlichen Geschwindigkeiten angetrieben werden, um den Behälter B während der Transportbewegung gleichzeitig um seine Hochachse zu rotieren. An einer Seite der Fördervorrichtung F ist eine Beleuchtungsquelle L angeordnet, beispielsweise wenigstens ein LED-Leuchtfeld 3, das über eine elektronische Steuereinrichtung C1 zu Einzelblitzen aktivierbar ist. Beispielsweise an der gegenüberliegenden Seite ist eine einzige CCD-Kamera K angeordnet und auf den Inspektionsbereich ausgerichtet, in der Aufnahmen des Behälters gebildet werden. Und zwar werden zwei verschiedene Aufnahmen gebildet, nämlich abwechselnd jeweils eine Wandaufnahme und eine Konturaufnahme. Für die CCD-Kamera ist eine elektronische Steuereinrichtung C2 vorgesehen.

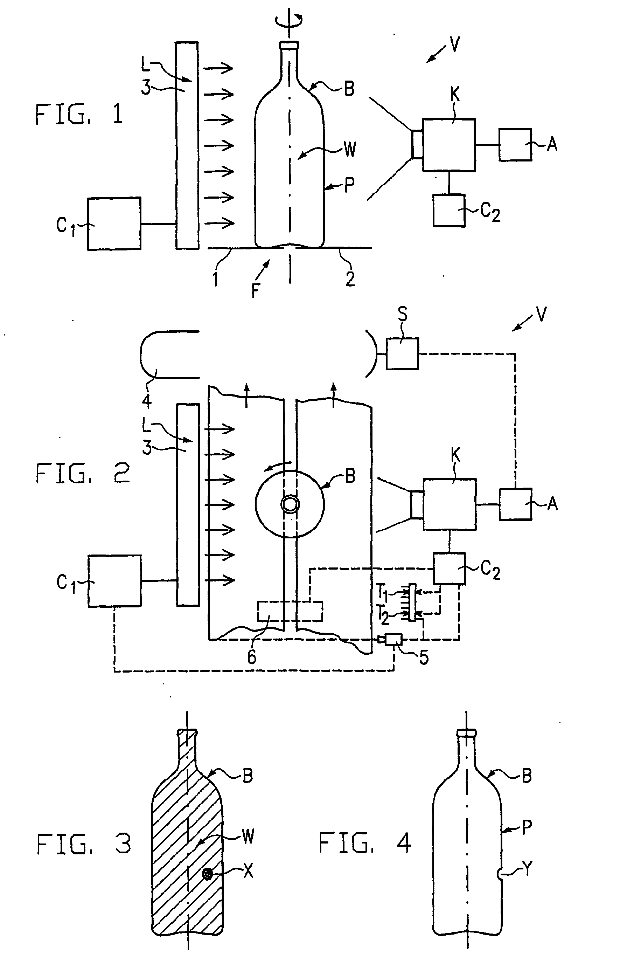

In der schematischen Draufsicht von Fig. 2 ist ferner eine mit der einzigen CCD-Kamera K verbundene Auswerteeinrichtung A erkennbar, in der die Wandaufnahmen und die Konturaufnahmen ausgewertet werden. Bei Ermittlung einer Verschmutzung und/oder eines Schadens und/oder Konturabweichung wird eine Aussonderungsvorrichtung S angesteuert, die den betroffenen Behälter B in einen Bereich 4 (Sammelbehälter o.dgl.) überführt.

Eingangs des Inspektionsbereiches ist ein Sensor 5 vorhanden, der zum Takten der Beleuchtungsquelle L und der CCD-Kamera K an die Steuereinrichtungen C1, C2 angeschlossen sein kann. Die Steuereinrichtungen können ferner an einen Drehgeber des Antriebs 6 der Fördervorrichtung F angeschlossen sein, um in Abhängigkeit von der Fördergeschwindigkeit dem Behälter B im Inspektionsbereich zu folgen. Dies ist beispielsweise zweckmäßig, wenn von einem Behälter mehrere Aufnahmen in verschiedenen Drehpösitionen gemacht werden sollen. Hardware- oder softwareseitige Triggerpositionen T1, T2 werden bei der Inspektion berücksichtigt, um beispielsweise über die Steuereinrichtung C2 die Belichtungsempfindlichkeit der CCD-Kamera K zwischen den jeweils ersten und darauffolgenden zweiten Aufnahmen abwechselnd so zu verändern, dass bei einer Wandaufnahme (erste Aufnahme) eine andere Belichtungsempfindlichkeit eingestellt wird als bei einer Konturaufnahme (zweite Aufnahme). Dabei ist es zweckmäßig, mehrere Triggerpositionen zu berücksichtigen, beispielsweise bei einer Mehrfachaufnahme eines Behälters.

In Fig. 3 ist eine Wandaufnahme des Behälters B schematisch angedeutet, die durch Einstellen der Belichtungsempfindlichkeit, das heißt der Belichtungszeit, der CCD-Kamera K optimal belichtet ist, um Verunreinigungen und/oder Schäden X an bzw. in der Wand W des durchleuchteten Behälters zu ermitteln. In der Praxis ist die Abbildung der Wandaufnahme zur Bestimmung der Kontur des Behälters nicht optimal. Normalerweise liefert eine für die Wandaufnahme passende Belichtung eine für die Konturkontrolle zu helles Bild, aus dem der Behälterumriss nur schwer ermittelbar ist.

In der Konturaufnahme in Fig. 4 ist hingegen die Kontur P des Behälters B scharf und aussagefähig abgebildet, wie durch die verdickte Umrisslinie angedeutet ist, um Abweichungen Y in der Kontur zu ermitteln. In der Konturaufnahme ist die Wand selbst zur Erkennung von Schmutzflecken etc. in nicht genügend aussagefähiger Qualität abgebildet. Eine für die Konturkontrolle passende Belichtung ist in der Regel für eine Wandkontrolle zu dunkel.

Gegebenenfalls wird nicht nur die Belichtungsempfindlichkeit der CCD-Kamera so verändert, dass die Wandaufnahmen und die Konturaufnahmen optimal belichtet sind, sondern wird u.a. zum Ausgleich unterschiedlicher Transparenzgrade der Behälter auch die Beleuchtungsstärke verändert, indem beispielsweise die Blitzzeit des LED-Leuchtfeldes 3 über die Steuereinrichtung C1 verändert wird.

Die für die jeweilige Wandaufnahme bzw. Konturaufnahme optimale Belichtungsempfindlichkeit oder Belichtungszeit für den Behälter B wird vorab eingestellt. Bei der Inspektion wird dann die Belichtungsempfindlichkeit zwischen den eingestellten Werten abwechselnd hin- und herverstellt. Dabei ist es möglich, den jeweiligen Transparenzgrad des zu inspizierenden Behälters abzutasten und dann die jeweils optimale Triggerposition T1 oder T2 bzw. die dieser Triggerposition zugehörige Belichtungsempfindlichkeit einzustellen. Ähnlich kann auch die Blitzzeit für die Wandaufnahme bzw. die Konturaufnahme individuell eingestellt werden.

## Patentansprüche

1. Verfahren zum Inspizieren fortlaufend geförderter transparenter Behälter (B), bei dem jeder Behälter (B) mit wenigstens einer Beleuchtungsquelle beleuchtet und mit einer einzigen CCD-Kamera zwei Aufnahmen desselben Behälters hergestellt und ausgewertet werden, wobei mit der einen Aufnahme zur Konturauswertung die Behälterkontur und mit der anderen Aufnahme zur wandauswertung die Behälterwand abgebildet wird, **dadurch gekennzeichnet, dass** zwischen den beiden zeitversetzten Aufnahmen die Belichtungszeit der CCD-Kamera (K) von einer vorab eingestellten Behälterwand-Belichtungszeit auf eine ebenfalls vorab eingestellte Behälterprofil-Belichtungszeit verändert wird, während die Beleuchtungs einrichtung bei beiden Aufnahmen keine unterschiedlich einstellbaren Helligkeitszonen aufweist.

2. Verfahren nach Anspruch 1, **dadurch gekennzeichnet, dass** die jeweils zwei Aufnahmen bei gleicher Beleuchtungsstärke, insbesondere durch Blitzen, gebildet werden.

3. Verfahren nach Anspruch 1, **dadurch gekennzeichnet, dass** die jeweils zwei Aufnahmen eines Behälters (B) unmittelbar nacheinander erfolgen und gespeichert werden, während die Auswertung der Aufnahmen parallel oder nacheinander abläuft.

4. Vorrichtung (V) zum Inspizieren transparenter Behälter (B), insbesondere Getränkeflaschen, mit einer Behälter-Fördervorrichtung (F) zur fortlaufenden Förderung der Behälter, wenigstens einer Beleuchtungsquelle (L), und einer einzigen CCD-Kamera (K), die mit einer Auswerteeinrichtung (A) für Behälteraufnahmen verbunden ist, wobei mit der CCD-Kamera (K) Behälterwandaufnahmen und Behälterprofilaufnahmen hergestellt werden , **dadurch gekennzeichnet, dass** eine Steuereinrichtung (C2) vorgesehen und so ausgebildet ist, dass bei zwei zeitlich versetzt nacheinander erfolgenden Aufnahmen eines Behälters die Belichtungsempfindlichkeit der CCD-Kamera (K) zeitlich versetzt abwechselnd zwischen einer vorab eingestellten Behälterprofilbelichtungsempfindlichkeit und einer ebenfalls vorab eingestellten Behälterwandbelichtungsempfindlichkeit wechselt, während die Beleuchtungs einrichtung bei beiden Aufnahmen keine unterschiedlich einstellbaren Helligkeitszonen aufweist.

5. Vorrichtung nach Anspruch 4, **dadurch gekennzeichnet, dass** die Steuereinrichtung (C2) wenigstens einen elektronischen Steuerkreis aufweist, mit dem anhand mindestens zweier Triggerpositionen (T1, T2) die Belichtungszeit der CCD-Kamera (K) veränderbar ist.

6. Vorrichtung nach Anspruch 4, **dadurch gekennzeichnet, dass** die Beleuchtungsquelle (L) wenigstens ein LED-Leuchtfeld (3) umfasst, das in Einzelblitzen aktivierbar ist.

7. Vorrichtung nach Anspruch 6, **dadurch gekennzeichnet, dass** dem LED-Leuchtfeld (3) eine Blitzzeit-Verstellvorrichtung (C1) zugeordnet ist, vorzugsweise ein mittels verschiedener Triggerpositionen die Blitzzeit zur Beleuchtungsstärkenänderung verstellender elektronischer Steuerkreis.

## Claims

1. Process for inspecting continuously conveyed transparent vessels (B), whereby each vessel (B) is illuminated with at least one lighting source and two photographs of the same vessel are produced and assessed with a single CCD camera, whereby the outline form of the vessel is pictured with one photograph for assessing the outline form of the vessel and the surface of the vessel is pictured using the other photograph that is for assessment of the surface of the vessel, **characterized in that**, between the two photographs, which are temporally shifted, the illumination period of the CCD camera (K) is changed from a previously set vessel wall illumination period to a likewise previously set vessel profile illumination period, while the illumination device has, for both photographs, no zones of brightness that can be set differently for the two photographs.

2. Process in accordance with claim 1, **characterized in that** the, in each case, two photographs are formed at the same levels of illumination, particularly by means of flashes.

3. Process in accordance with claim 1, **characterized in that**, the two photographs of a vessel (B) are in each case taken and stored immediately one after the other, whereas the assessment of the photographs occurs either simultaneously or for one photograph after the other.

4. Device (V) for inspecting transparent vessels (B), particularly drinks bottles, with a vessel conveying device (F) for continuous conveying of the vessels, at least one lighting source (L), and a single CCD camera (K) that is connected to an assessment device (A), whereby photographs of the surfaces of the vessels and photographs of the outline forms of the vessels are taken with the CCD camera (K), **characterized in that** a control device (C2) is provided and formed such that, in the case of two temporally shifted, successive photographs of a vessel, the illumination sensitivity of the CCD camera (K) changes, at temporally shifted moments, between a pre-set vessel-profile illumination sensitivity and a likewise pre-set vessel surface-illumination sensitivity, while the illumination device has no zones of brightness that can be differently set for the two photographs.

5. Device in accordance with claim 4, **characterized in that** the control device (C2) has at least one electronic control circuit with which the illumination period of the CCD camera (K) can, in connection with at least two trigger points (T1, T2), be varied.

6. Device in accordance with claim 4, **characterized in that** the illumination source (L) comprises at least one LED light field (3) that can be activated in separate flashes.

7. Device in accordance with claim 6, **characterized in that** the LED light field (3) has a flash-period adjustment device (C1) associated with it, preferably an electronic control circuit that can adjust the flash period for changing the level of illumination, by means of different trigger points.

## Revendications

1. Procédé d'inspection de récipients transparents (B) transportés en continu, selon lequel une source lumineuse éclaire chaque récipient (B) dont deux vues sont prises par une seule caméra CCD et exploitées, une vue donnant l'image du contour du récipient pour évaluation de celui-ci, tandis que l'autre vue donne l'image de la paroi du récipient pour évaluation de celle-ci,
**caractérisé en ce qu'**
entre les deux prises de vue décalées dans le temps, la durée d'éclairage de la caméra CCD (K) est modifiée pour passer d'un temps d'éclairage de la paroi du récipient défini préalablement à un temps d'éclairage du profil du récipient, défini également préalablement, le dispositif d'éclairage ne présentant pas, lors des deux prises de vue, des zones de luminosité pouvant être réglées différemment.

2. Procédé selon la revendication 1,
**caractérisé en ce que**
deux vues sont chaque fois formées avec la même intensité d'éclairement, notamment au moyen d'un flash.

3. Procédé selon la revendication 1,
**caractérisé en ce que**
deux vues d'un récipient (B) sont chaque fois prises en succession directe et enregistrées l'évaluation des vues s'effectuant en parallèle ou successivement.

4. Dispositif (V) pour inspecter des récipients transparents (B), notamment des bouteilles de boisson, comprenant un dispositif (F) pour transporter en continu les récipients, au moins une source d'éclairage (L) et une seule caméra CCD (K) reliée à un dispositif d'évaluation (A) des vues des récipients, la caméra (K) prenant des vues des parois et des profils des récipients
**caractérisé en ce qu'**
il est prévu un dispositif de commande (C2) de manière que lors des prises de vue d'un récipient, se succédant dans le temps, la sensibilité à l'éclairement de la caméra CCD (K) varie alternativement entre une sensibilité préréglée pour l'éclairement du profil du récipient et une sensibilité également préréglée pour l'éclairement de la paroi du récipient, le dispositif d'éclairage ne présentant pas, lors des deux prises de vue, des zones de luminosité pouvant être réglées différemment.

5. Dispositif selon la revendication 4,
**caractérisé en ce que**
le dispositif de commande (C2) comprend au moins un circuit électronique de commande permettant de modifier à l'aide d'au moins deux positions de déclenchement (T1, T2) le temps d'éclairage de la caméra CCD (K).

6. Dispositif selon la revendication 4,
**caractérisé en ce que**
la source d'éclairage (L) comprend au moins un champ d'éclairage à LED (3) qui peut être activé pour donner des flashs individuels.

7. Dispositif selon la revendication 6,
**caractérisé en ce qu'**
au champ d'éclairage à LED (3) est associé un dispositif de réglage (C1), de préférence un circuit électronique de commande qui, à l'aide de déclenchements différents, modifie les temps de flash pour modifier la puissance de l'éclairage.
